# FASCICULE DE BREVET EUROPEEN

(11) **EP 0 941 260 B1**
(45) Date de publication et mention de la délivrance du brevet: **25.04.2001**
(21) Numéro de dépôt: 97947088.7
(22) Date de dépôt: 18.11.1997
(51) Int. Cl.: C08F 220/24

(54) **COPOLYMERES FLUORES POUR LE TRAITEMENT OLEOPHOBE ET HYDROPHOBE DE SUBSTRATS DIVERS**
FLUORIERTE COPOLYMERE FÜR DIE ÖL - UND WASSER ABWEISENDE BEHANDLUNG VON SUBSTRATEN
FLUOROCOPOLYMERS FOR OIL REPELLING AND WATERPROOFING TREATMENT OF VARIOUS SUBSTRATES

(30) Priorité: 27.11.1996 FR 9614546
(43) Date de publication de la demande: 15.09.1999
(73) Titulaire: Atofina, 92800 Puteaux (FR)
(72) Inventeur: CORPART, Jean-Marc, F-95110 Sannois (FR); DESSAINT, André, F-60600 Clermont (FR); LINA, Marie-José, F-69005 Lyon (FR)
(86) Numéro de dépôt international: FR9702078
(87) Numéro de publication internationale: WO9823657

(56) Documents cités:
- EP-A- 0 542 598
- US-A- 3 271 349

## Description

La présente invention a pour objet des copolymères fluorés et leur utilisation pour le revêtement et l'imprégnation de substrats divers tels que textiles, cuirs, bois, non-tissés, métaux, béton et, plus particulièrement, papiers et articles similaires pour les rendre oléophobes et hydrophobes. Elle concerne également les substrats ainsi traités.

Différents produits ont été proposés par le passé pour ce type de traitement. En particulier, dans le brevet EP 542 598 on a proposé des copolymères acryliques fluorés, salifiés ou quaternisés, comprenant en poids :
***(a)*** 50 à 92 %, de préférence 70 à 90 %, d'un ou plusieurs monomères polyfluorés de formule générale : 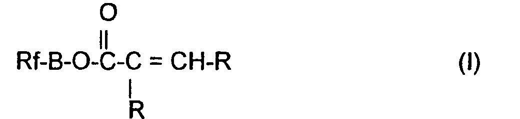 dans laquelle Rf représente un radical perfluoré à chaîne droite ou ramifiée, contenant 2 à 20 atomes de carbone, de préférence 4 à 16 atomes de carbone, B représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 %, de préférence 8 à 18 %, d'un ou plusieurs monomères de formule générale : 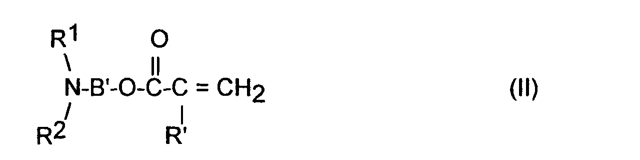 dans laquelle B' représente un radical alkylène, linéaire ou ramifié, contenant 1 à 4 atomes de carbone, R' représente un atome d'hydrogène ou un radical alkyle contenant 1 à 4 atomes de carbone, les symboles R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
***(c)*** 1 à 25 %, de préférence 2 à 10 %, d'un dérivé vinylique de formule générale :

   R"-CH = CH₂ (III)

   dans laquelle R" peut être un groupement alkylcarboxylate ou alkyléther contenant de 1 à 18 atomes de carbone ;
***(d)*** 0 à 10 %, de préférence 0 à 8 %, d'un monomère quelconque autre que les monomères de formules I, II et III.

Ces copolymères fluorés, parfaitement diluables à l'eau, sont applicables sur différents supports tels que cuir, non-tissés, matériaux de construction, papier et carton. En particulier, ils peuvent être appliqués sur papier selon différentes techniques (en size-press ou dans la masse) conférant ainsi au papier, sans nécessité d'adjuvants (séquestrants, agents de rétention, résines de fixation, ...) d'excellentes propriétés hydrophobes et oléophobes.

De tels papiers sont utilisés dans le domaine de l'emballage des produits alimentaires humides et/ou gras dans des marchés aussi variés que le secteur de la biscuiterie/viennoiserie, la restauration rapide, le marché de la margarine et du beurre, le marché des viandes et des volailles, le domaine du chocolat ou du café, les produits surgelés, le marché des aliments secs pour chiens et chats (pet food).

Qans le cas des aliments pour animaux, le traitement fluoré doit être apte à assurer une barrière à des graisses particulièrement agressives (esters d'acides gras) pour empêcher l'apparition de taches liées à la migration de ces graisses, notamment dans les coins et les plis des emballages.

Pour obtenir une amélioration de l'effet barrière aux graisses, il est avantageux d'associer les copolymères acryliques fluorés décrits dans le brevet EP 542 598 à un amidon ou à un alcool polyvinylique. Cependant, dans le cas de certains papiers, la barrière aux graisses n'est obtenue qu'après un temps assez long de mûrissement du papier, par simple stockage à la température ambiante pendant deux à trois semaines. La nécessité de devoir stocker le papier avant de l'utiliser pour réaliser des emballages, l'impossibilité de contrôler la qualité de sa production à la sortie de la machine et la nécessité de gérer les délais de livraison à ses clients posent des problèmes importants au papetier.

Il a maintenant été trouvé qu'on peut remédier à cet inconvénient et obtenir les performances désirées de l'effet barrière aux graisses au bout de quelques jours seulement (moins d'une semaine) en modifiant les conditions de synthèse des copolymères décrits dans le brevet EP 542 598.

Les produits du brevet EP 542 598 sont préparés par copolymérisation des monomères en solution dans un solvant organique miscible à l'eau ou dans un mélange de tels solvants .Le milieu réactionnel est ensuite dilué à l'eau en présence d'un acide minéral ou organique pour salifier les macromolécules.

Pour préparer les copolymères fluorés de la présente invention, on opère de la même façon, mais en outre lors de l'étape de salification ou après celle-ci on soumet le copolymère à l'action du peroxyde d'hydrogène.

L'invention a donc pour objet les copolymères fluorés susceptibles d'être obtenus par copolymérisation de :
***(a)*** 50 à 92 % en poids d'au moins un monomère polyfluoré de formule générale I,
***(b)*** 1 à 25 % en poids d'au moins un monomère de formule générale II,
(c) 1 à 25 % en poids d'au moins un monomère vinylique de formule générale III, et
***(d)*** 0 à 10 % en poids d'un ou plusieurs monomères autres que ceux de formules I, II et II,
ladite copolymérisation étant effectuée dans un solvant ou mélange de solvants organique(s) miscible(s) à l'eau et étant suivie d'une étape de dilution par une solution aqueuse d'un acide minéral ou organique,
caractérisés en ce que ladite étape est réalisée en présence de peroxyde d'hydrogène ou est suivie d'un traitement au moyen d'une solution aqueuse de peroxyde d'hydrogène, la quantité de peroxyde d'hydrogène utilisée étant comprise entre 0,1 et 10% par rapport au poids total de monomère initial.

Comme dans le brevet EP 542 598 on préfère les copolymères obtenus à partir de 70 à 90 % de monomère(s) polyfluoré(s) de formule I, 8 à 18 % de monomère(s) de formule II, 2 à 10 % de monomère(s) vinylique(s) de formule III, et 0 à 8 % de monomère(s) autres que ceux de formules I, II et III.

De nombreux exemples de monomères de formule I, II et III et de monomères optionnels (d) sont mentionnés dans le brevet EP 542 598 (page 3, ligne 35 jusqu'à page 5, ligne 44) auquel on pourra se référer. Selon la présente invention, on préfère utiliser :
***(a)*** comme monomères polyfluorés de formule I, les composés de formule : 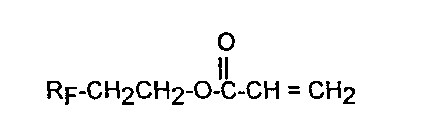 dans laquelle R_{F} est un radical perfluoroalkyle contenant 4 à 16 atomes de carbone ;
***(b)*** le méthacrylate de diméthylaminoéthyle ou le méthacrylate de N-tertiobutylaminoéthyle comme monomère de formule II ; et
***(c)*** l'acétate de vinyle comme monomère de formule III.

Comme solvants organiques miscibles à l'eau dans lesquels est effectuée la copolymérisation, on peut mentionner à titre non limitatif des cétones (par exemple l'acétone, la méthyl éthyl cétone), des alcools (par exemple l'isopropanol), des éthers (par exemple l'éther méthylique ou éthylique de l'éthylène glycol ou du propylène glycol et leurs acétates, le tétrahydrofuranne et le dioxanne), le diméthylformamide, la N-méthyl-2-pyrrolidone, la butyrolactone et le diméthylsulfoxyde. Pour la mise en oeuvre de l'invention, on préfère utiliser comme solvant la N-méthyl-2-pyrrolidone (NMP) ou un mélange de celle-ci avec l'acétone. La concentration totale des monomères dans le solvant ou mélange de solvants organique(s) peut aller de 20 à 70 % en poids et est de préférence comprise entre 40 et 60 %.

La copolymérisation est effectuée en présence d'au moins un initiateur, utilisé à raison de 0,1 à 1,5 % par rapport au poids total de monomères. Comme initiateurs, on peut utiliser des peroxydes tels que le peroxyde de benzoyle, le peroxyde de lauroyle, le peroxyde de succinyle et le perpivalate de tert-butyle, ou des composés azoïques comme, par exemple, l'azo-2,2'-bis-isobutyronitrile, l'azo-4,4'-bis(cyano-4-pentanoïque) et l'azodicarbonamide. L'étape de copolymérisation peut être réalisée à une température allant de 40°C jusqu'au point d'ébullition du mélange réactionnel. De préférence, on opère entre 60 et 90°C.

L'étape de dilution consiste à ajouter à la solution organique du copolymère une solution aqueuse d'un acide minéral ou organique fort ou moyennement fort, c'est-à-dire dont la constante de dissociation ou la première constante de dissociation est supérieure à 10⁻⁵. Comme tels acides on peut citer, par exemple, les acides chlorhydrique, bromhydrique, sulfurique, nitrique, phosphorique, acétique, formique, propionique ou lactique, mais de préférence on utilise l'acide acétique. La quantité de solution aqueuse à utiliser et sa concentration en acide doivent être suffisantes, d'une part, pour salifier complètement les fonctions amine apportées par le ou les monomère(s) de formule Il et, d'autre part, pour obtenir une solution finale de copolymère ayant une teneur en matières sèches comprise entre 5 et 30 %, de préférence entre 20 et 30 %. Pour la salification complète des fonctions amine, la quantité d'acide est avantageusement comprise entre 1 et 5 équivalents acide par rapport au(x) monomère(s) de formule II, de préférence entre 2 et 3 équivalents.

La quantité de peroxyde d'hydrogène utilisée est comprise entre 0,1 et 10 %, de préférence de 0,3 à 3 % par rapport au poids total de monomères initial. Le traitement s'effectue entre 25 et 100°C, de préférence de 70 à 85°C. Si la concentration de peroxyde d'hydrogène utilisé est élevée (supérieure ou égale à 3 %), la structure chimique du copolymère est sensiblement modifiée. Le peroxyde d'hydrogène réagit avec les fonctions amino issues du monomère de formule (II) salifié pour conduire à la formation de groupements N-oxyde le long des macromolécules. La cationicité du copolymère est nettement diminuée et le produit fluoré n'est plus capable seul de s'adsorber sur les fibres de cellulose anioniques. Si l'on veut l'appliquer dans la masse, il faut lui adjoindre une résine de fixation cationique.

Lorsque le taux de peroxyde d'hydrogène reste suffisamment faible, la structure du copolymère fluoré n'est pas sensiblement modifiée et les conditions d'application du produit restent les mêmes que celles définies dans le brevet EP 542 598 . De manière surprenante et inattendue, les performances de résistance aux graisses agressives présentes dans les "pet food" sont pourtant nettement améliorées.

Après le traitement du mélange réactionnel avec une solution aqueuse de peroxyde d'hydrogène, une distillation sous vide ou un balayage avec un gaz inerte, par exemple l'azote, permet d'éliminer les composés volatils et d'obtenir un produit commercial n'ayant plus de point d'éclair entre 0 et 100°C suivant la norme ASTM D3828. En particulier, si le milieu de réaction est un solvant léger comme l'acétone, le produit final après distillation ne comprend plus de solvant organique.

Le traitement au peroxyde d'hydrogène selon la présente invention facilite grandement cette opération de distillation. En effet, le peroxyde d'hydrogène réagit en grande partie avec l'acétate de vinyle résiduel pour donner de l'acétaldéhyde et de l'acide acétique. L'acétaldéhyde dont le point d'ébullition est de 19°C est facilement éliminé du milieu par distillation ou par balayage avec un gaz inerte, par exemple l'azote.

La présente invention a également pour objet un substrat solide comprenant au moins un copolymère fluoré selon l'invention, tel que défini précédemment.

Comme substrats susceptibles d'être rendus oléophobes et hydrophobes avec les produits selon l'invention, on préfère utiliser les papiers, les cartons et les matériaux assimilés. On peut également utiliser d'autres matériaux très divers tels que, par exemple, les articles tissés ou non-tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, les surfaces peintes. On peut également traiter avec profit les matériaux de construction tels que le béton, la pierre, la brique et les carrelages avec les produits suivant l'invention.

Les solutions de copolymères selon l'invention sont appliquées principalement diluées en milieu aqueux ou dans un mélange d'eau et de solvants, suivant des techniques connues, par exemple par enduction, imprégnation, immersion, pulvérisation, brossage, foulardage, couchage.

Sur papier, les produits selon l'invention peuvent être appliqués en solution aqueuse soit superficiellement sur le support déjà terminé (de préférence à raison de 0,05 à 0,2 % de fluor par rapport au poids de papier), soit dans la masse, c'est-à-dire dans la pâte à papier ou dans la pulpe (de préférence à raison de 0,2 à 0,4 % de fluor par rapport au poids de pâte).

Les supports ainsi traités présentent de bonnes propriétés oléophobes et hydrophobes après un simple séchage à température ambiante ou à température élevée, suivi éventuellement d'un traitement thermique pouvant aller, suivant la nature du support, jusqu'à 200°C.

Pour obtenir une bonne fixation des copolymères selon l'invention sur les substrats sur lesquels ils sont appliqués et pour conférer en plus un effet particulier, il est parfois avantageux de les associer avec certains adjuvants, polymères, produits thermocondensables et catalyseurs susceptibles de favoriser leur réticulation avec le support. Comme tels, on peut citer les condensats ou précondensats d'urée formol ou de mélamine formol, les dérivés époxy comme le diglycidylglycérol, les résines polyamine-épichlorhydrine, le glyoxal et ses dérivés, les alcools polyvinyliques et les amidons cationiques, oxydés et amphotères.

Il peut également être avantageux d'associer les copolymères selon l'invention avec un ou plusieurs tensioactifs non ionique(s) et/ou cationique(s) pour améliorer le mouillage du support. Le poids de ce ou ces tensioactifs par rapport au poids total de copolymère peut varier de 0 à 100 %.

Les tensioactifs peuvent être ajoutés dans la solution organique durant la réaction de copolymérisation. Ils peuvent également être ajoutés au moment de l'application des copolymères selon l'invention.

Pour évaluer les performances des substrats traités selon l'invention, on a utilisé les tests suivants :

### • Test d'ingraissabilité ou "kit value"

Ce test décrit dans Tappi, vol. 50, n°10, pages 152A et 153A, norme RC 338 et UM 511, permet de mesurer l'ingraissabilité des substrats par des mélange d'huile de ricin, de toluène et d'heptane. Ceux-ci contiennent des quantités variables de ces trois produits :

| **Nombre Kit (Kit Value)** | **Volume d'huile de ricin** | **Volume de toluène** | **Volume d'heptane** |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes, puis on observe soigneusement l'aspect des papiers ou cartons et on note le mouillage ou la pénétration mis en évidence par un brunissement de la surface. Le nombre correspondant au mélange contenant le pourcentage le plus élevé d'heptane, qui ne pénètre pas ou ne mouille pas le papier, est la "kit value" du papier et est considéré comme étant le taux d'oléophobie du papier traité. Plus la "kit value" est élevée, meilleure est l'oléophobie du papier.

### • Test de Cobb

Le test de Cobb [NF EN 20535-ISO 535 (1994)] consiste à mesurer le poids (en g) d'eau absorbée pendant une minute par un mètre carré de papier supportant une hauteur d'eau d'un centimètre.

### • Test de résistance aux croquettes

Dans une étuve climatique à 60°C et 65 % d'humidité relative, on dépose sur une surface de 100 cm² du papier traité, 200 g de croquettes pour chiens de marque YAM'S (qualité EUKANUBA PUPPY).

L'ensemble est posé sur un papier non traité, absorbant (type papier filtre) de même surface. Après quoi, on pose sur le tout un poids de 3,5 kg et on laisse à l'étuve pendant 3 jours.

La diffusion des graisses est évaluée en mesurant la surface totale des taches qui sont apparues sur le papier absorbant. On considère que la barrière aux graisses est efficace quand la surface tachée est inférieure à 10 % de la surface totale du papier absorbant.

Les exemples suivants illustrent l'invention sans la limiter. Les parties indiquées sont en poids, sauf mention contraire.

### EXEMPLE 1

Dans un réacteur de 500 parties en volume, équipé d'une agitation, d'un thermomètre, d'un réfrigérant à reflux, d'une ampoule de coulée, d'une arrivée d'azote et d'un dispositif de chauffage, on charge 90 parties de NMP, 10 parties d'acétone, 16 parties de méthacrylate de diméthylaminoéthyle, 10 parties d'acétate de vinyle, 81,4 parties d'un mélange d'acrylates fluorés de formule : 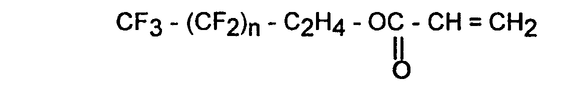 où n est égal à 5, 7, 9, 11 et 13 dans des rapports en poids moyens et respectifs de 1/63/25/9/3 et 0,8 partie d'acide 4,4'-azobis(cyano-4-pentanoïque).

On chauffe à 85°C sous atmosphère d'azote pendant 6 heures, puis on coule goutte à goutte à 75°C une solution aqueuse comportant 200 parties d'eau, 8 parties d'acide acétique et 2,5 parties d'eau oxygénée à 35 % en poids.

On maintient deux heures à 75°C sous balayage d'azote, puis on refroidit jusqu'à la température ambiante. On obtient ainsi 390 parties d'une solution ambrée limpide (S1) contenant 25 % de matière sèche. Cette solution ne présente pas de point d'éclair entre 0 et 100°C selon la norme ASTM D3828.

### EXEMPLE 2

On procède comme dans l'exemple 1 mais en supprimant l'acétone et en portant à 20 parties la quantité d'acétate de vinyle. Après polymérisation, on ajoute goutte à goutte à 75°C une solution comprenant 200 parties d'eau, 8 parties d'acide acétique et 2,5 parties d'eau oxygénée à 35 % en poids. On maintient une heure à 78°C, puis on balaye à l'azote à la même température pendant une heure.

On obtient ainsi 390 parties d'une solution opalescente (S2) contenant 25,7 % de matière sèche. Cette solution ne présente pas de point d'éclair entre 0 et 100°C.

### EXEMPLE 3

On procède comme à l'exemple 1 avec 10 parties d'eau oxygénée à 35 % au lieu de 2,5 parties. On obtient 395 parties d'une solution jaune limpide (S3) contenant 24,7 % de matière sèche. Cette solution ne présente pas de point d'éclair entre 0 et 100°C.

### EXEMPLE 4

On utilise les solutions (S1), (S2), (S3), une solution de copolymère acrylique fluoré à 25 % de matière sèche telle que décrite à l'exemple 4 du brevet EP 542 598 (solution S4) et un amidon cationique (Hi Cat SP 050 de la Société Roquette).

Avec ces différents constituants, on prépare les bains de size-press décrits dans le tableau ci-dessous.

| **Constituants du bain (g/l)** | **Numéro du bain** | | | |
|---|---|---|---|---|
| | **1** | **2** | **3** | **4** |
| Solution S1 | 13,5 | | | |
| Solution S2 | | 13,5 | | |
| Solution S3 | | | 13,5 | |
| Solution S4 | | | | 13,5 |
| Amidon | 25 | 25 | 25 | 25 |
| Eau | 961,5 | 961,5 | 961,5 | 961,5 |
| **TOTAL** | 1000 | 1000 | 1000 | 1000 |

Le pH des bains est réglé à 6. Les différentes compositions sont appliquées en size-press sur un papier composé de pâte blanchie, non collé, de 70 g/m². Le taux d'enlevage est de l'ordre de 110 %. Après séchage pendant deux minutes à 110°C, les papiers ainsi traités sont stockés pendant 3 jours à température ambiante puis soumis aux différents tests.

Les résultats obtenus sont regroupés dans le tableau suivant :

| **Tests** | **Papier traité avec le bain n°** | | | | **Papier non traité** |
|---|---|---|---|---|---|
| | **1** | **2** | **3** | **4** | |
| Kit value | 12 | 12 | 12 | 8 | 0 |
| Cobb (g/m²) | 18 | 19 | 19 | 22 | > 100 |
| Test des croquettes (surface tachée en %) | 0 | 0 | 0 | 100 | 100 |

L'examen du tableau montre que, à taux de fluor comparable, les papiers traités avec les produits fluorés selon l'invention constituent une barrière nettement améliorée à la migration des graisses contenues dans les croquettes pour animaux domestiques.

## Revendications

1. Copolymères fluorés cationiques susceptibles d'être obtenus par copolymérisation de :
***(a)*** 50 à 92 % en poids d'un ou plusieurs monomères polyfluorés de formule générale : 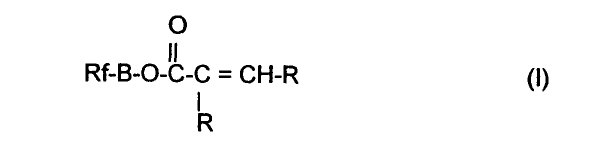 dans laquelle Rf représente un radical perfluoré à chaîne droite ou ramifiée, contenant 2 à 20 atomes de carbone, B représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 % d'un ou plusieurs monomères de formule générale : 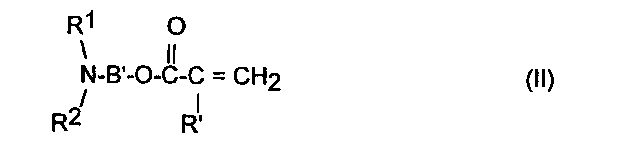 dans laquelle B' représente un radical alkylène, linéaire ou ramifié, contenant 1 à 4 atomes de carbone, R' représente un atome d'hydrogène ou un radical alkyle contenant 1 à 4 atomes de carbone, les symboles R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
***(c)*** 1 à 25 % d'un dérivé vinylique de formule générale :
R"-CH = CH₂ (III)
dans laquelle R" peut être un groupement alkylcarboxylate ou alkyléther contenant de 1 à 18 atomes de carbone ;
***(d)*** 0 à 10 %, d'un monomère quelconque autre que les monomères de formules I, II et III, ladite copolymérisation étant effectuée en solution dans un solvant ou mélange de solvants organique(s) miscible(s) à l'eau et étant suivie d'une étape de dilution par une solution aqueuse d'un acide minéral ou organique,
caractérisés en ce que ladite étape est réalisée en présence de peroxyde d'hydrogène ou est suivie d'un traitement au moyen d'une solution aqueuse de peroxyde d'hydrogène, la quantité de peroxyde d'hydrogène utilisée étant comprise entre 0,1 et 10 % par rapport au poids total de monomères initial.

2. Copolymères selon la revendication 1 résultant de la copolymérisation de 70 à 90 % en poids de monomère(s) polyfluoré(s) de formule I, 8 à 18 % en poids de monomère(s) de formule II, 2 à 10 % en poids de monomère(s) de formule III et de 0 à 8 % d'un ou plusieurs autres monomères.

3. Copolymères selon la revendication 1 ou 2 dans lesquels on utilise :
***(a)*** au moins un monomère polyfluoré de formule : 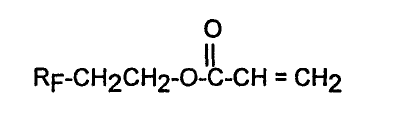 dans laquelle R_{F} est un radical perfluoroalkyle contenant 4 à 16 atomes de carbone ;
***(b)*** le méthacrylate de diméthylaminoéthyle ou le méthacrylate de N-tertiobutylaminoéthyle comme monomère de formule II ; et
***(c)*** l'acétate de vinyle comme monomère de formule III.

4. Copolymères selon l'une des revendications 1 à 3, dans lesquels la quantité de peroxyde d'hydrogène est comprise entre 0,3 et 3 %) par rapport au poids total des monomères.

5. Copolymères selon l'une des revendications 1 à 4, dans lesquels l'étape de dilution et/ou celle du traitement final est effectuée à une température comprise entre 25 et 100°C, de préférence entre 70 et 85°C.

6. Copolymères selon l'une des revendications 1 à 5, dans lesquels le solvant de copolymérisation est la N-méthyl-2-pyrrolidone ou un mélange de celle-ci avec l'acétone.

7. Copolymères selon l'une des revendications 1 à 6, dans lesquels l'acide utilisé est l'acide acétique.

8. Application des copolymères selon l'une des revendications 1 à 7, pour le traitement oléophobe et hydrophobe de substrats solides, en particulier des papiers et cartons.

9. Application selon la revendication 8 à la surface d'un papier à raison de 0,05 à 0,2 % de fluor par rapport au poids du papier.

10. Application selon la revendication 8 dans la masse d'une pâte à papier à raison de 0,2 à 0,4 % de fluor par rapport au poids de pâte.

11. Substrat solide comprenant au moins un copolymère fluoré selon l'une des revendications 1 à 7.

12. Substrat solide selon la revendication 11, caractérisé en ce qu'il s'agit de papier ou de carton.

## Patentansprüche

1. Kationische fluorierte Copolymere, die herstellbar sind durch Copolymerisation von:
(a) 50 bis 92 Gew.-% eines oder mehrerer polyfluorierter Monomeren der allgemeinen Formel: 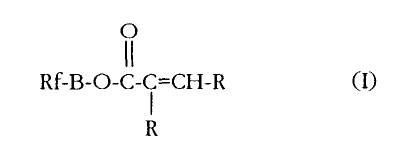 in der Rf einen perfluorierten Rest mit einer geraden oder verzweigten Kette mit 2 bis 20 Kohlenstoffatomen, B eine zweiwertige Verkettung, die an O durch ein Kohlenstoffatom gebunden ist und ein oder mehrere Sauerstoff-, Schwefel- und/oder Stickstoffatome enthalten kann, eins der Symbole R ein Wasserstoffatom und das andere ein Wasserstoffatom oder einen Alkylrest mit 1 bis 4 Kohlenstoffatomen bedeutet;
(b) 1 bis 25 Gew.-% eines oder mehrerer Monomeren der allgemeinen Formel: 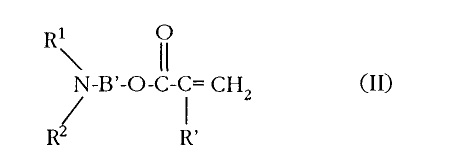 in der B' einen linearen oder verzweigten Alkylenrest mit 1 bis 4 Kohlenstoffatomen, R' ein Wasserstoffatom oder einen Alkylrest mit 1 bis 4 Kohlenstoffatomen bedeutet, die gleichen oder verschiedenen Symbole R¹ und R² jeweils ein Wasserstoffatom, einen linearen oder verzweigten Alkylrest mit 1 bis 18 Kohlenstoffatomen oder einen Hydroxyethyl- oder Benzylrest bedeuten oder R¹ und R² zusammen mit dem Stickstoffatom, an das sie gebunden sind, einen Morpholin-, Piperidin- oder Pyrrolidinyl-1-Rest bilden;
(c) 1 bis 25 Gew.-% eines Vinylderivats der allgemeinen Formel:
R"-CH = CH₂ (III)
in der R" eine Alkylcarboxylat- oder Alkylethergruppe mit 1 bis 18 Kohlenstoffatomen sein kann;
(d) 0 bis 10 Gew.-% irgendeines anderen Monomeren als die Monomeren der Formeln I, II und III,
wobei die genannte Copolymerisation in Lösung in einem Gemisch von organischen mit Wasser mischbaren Lösungsmitteln durchgeführt wird, gefolgt von einer Verdünnungsstufe mit einer wäßrigen Lösung einer mineralischen oder organischen Säure,
dadurch gekennzeichnet, daß die genannte Stufe in Gegenwart von Wasserstoffperoxid durchgeführt wird oder daß auf sie eine Behandlung mit einer wäßrigen Wasserstoffperoxidlösung folgt, wobei die Menge des verwendeten Wasserstoffperoxids zwischen 0,1 und 10 %, bezogen auf das Gesamtgewicht der Ausgangsmonomeren, liegt.

2. Copolymere nach Anspruch 1, hervorgegangen aus der Copolymerisation von 70 bis 90 Gew.-% eines oder mehrerer polyfluorierter Monomeren der Formel I, 8 bis 18 Gew.-% eines oder mehrerer Monomeren der Formel II, 2 bis 10 Gew.-% eines oder mehrerer Monomeren der Formel III und 0 bis 8 Gew.-% eines oder mehrerer anderer Monomeren.

3. Copolymere nach Anspruch 1 oder 2, in denen man verwendet:
(a) mindestens ein polyfluoriertes Monomeres der Formel: 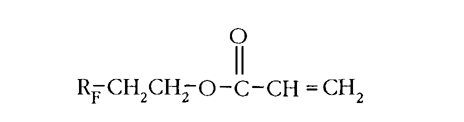 in der R_{F} einen Perfluoralkylrest mit 4 bis 16 Kohlenstoffatomen bedeutet;
(b) Dimethylaminoethyl-Methacrylat oder N-tertiobutylaminoethyl-Methacrylat als Monomeres der Formel II; und
(c) Vinylacetat als Monomeres der Formel III.

4. Copolymere nach einem der Ansprüche 1 bis 3, in denen die Wasserstoffperoxidmenge zwischen 0,3 und 3 % bezogen auf das Gesamtgewicht der Monomeren liegt.

5. Copolymere nach einem der Ansprüche 1 bis 4, in denen der Schritt der Verdünnung und/oder der der letzten Behandlung bei einer Temperatur zwischen 25 und 100 °C, vorzugsweise zwischen 70 und 85 °C, durchgeführt wird.

6. Copolymere nach einem der Ansprüche 1 bis 5, in denen das Lösungsmittel der Copolymerisation N-methyl-2-pyrrolidon oder ein Gemisch aus diesem mit Aceton ist.

7. Copolymere nach einem der Ansprüche 1 bis 6, in denen die verwendete Säure Essigsäure ist.

8. Verwendung der Copolymere nach einem der Ansprüche 1 bis 7 für die oleophobe und hydrophobe Behandlung von festen Substraten, insbesondere von Papier und Pappe.

9. Verwendung nach Anspruch 8 auf der Oberfläche eines Papiers in einer Menge von 0,05 bis 0,2 % Fluor, bezogen auf das Gewicht des Papiers.

10. Verwendung nach Anspruch 8 in einer Papiermasse in einer Menge von 0,2 bis 0,4 % Fluor, bezogen auf das Gewicht der Papiermasse.

11. Festes Substrat enthaltend mindestens ein fluoriertes Copolymeres nach einem der Ansprüche 1 bis 7.

12. Festes Substrat nach Anspruch 11, dadurch gekennzeichnet, daß es sich um Papier oder Pappe handelt.

## Claims

1. Cationic fluorocopolymers capable of being obtained by the copolymerization of:
*(a)* 50 to 92% by weight of one or more polyfluoromonomers of general formula: 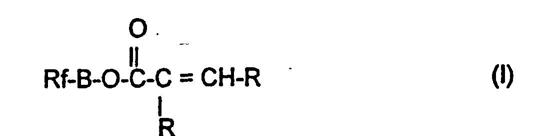 in which Rf represents a perfluorinated radical having a straight or branched chain, containing 2 to 20 carbon atoms, B represents a divalent linking which is linked to O by a carbon atom and which may comprise one or more oxygen, sulphur and/or nitrogen atoms, one of the symbols R represents a hydrogen atom and the other a hydrogen atom or an alkyl radical containing 1 to 4 carbon atoms;
*(b)* 1 to 25% of one or more monomers of general formula: 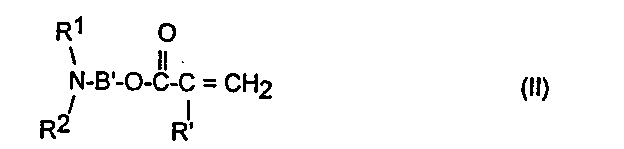 in which B' represents a linear or branched alkylene radical containing 1 to 4 carbon atoms, R' represents a hydrogen atom or an alkyl radical containing 1 to 4 carbon atoms, the symbols R¹ and R², which are identical or different, each represent a hydrogen atom, a linear or branched alkyl radical containing 1 to 18 carbon atoms or a hydroxyethyl or benzyl radical, or R¹ and R² together with the nitrogen atom to which they are linked form a morpholino, piperidino or pyrrolidin-1-yl;
*(c)* 1 to 25% of a vinyl derivative of general formula:
**R"-CH = CH**_{**2**} **(III)**
in which R' ' may be an alkyl carboxylate or alkyle ether group containing from 1 to 18 carbon atoms;
*(d)* 0 to 10% of any monomer other than the monomers of formulae I, II and III, the said copolymerization being carried out in solution in a water-miscible organic solvent or solvent mixture and being followed by a step of dilution with an aqueous solution of a mineral or organic acid,
characterized in that the said step is carried out in the presence of hydrogen peroxide or is followed by a treatment by means of an aqueous hydrogen peroxide solution, the amount of hydrogen peroxide used being between 0.1 and 10% with respect to the initial total weight of monomers.

2. Copolymers according to Claim 1, resulting from the copolymerization of 70 to 90% by weight of polyfluoromonomer(s) of formula I, 8 to 18% by weight of monomer(s) of formula II, 2 to 10% by weight of monomer(s) of formula III and from 0 to 8% of one or more other monomers.

3. Copolymers according to Claim 1 or 2, in which:
*(a)* at least one polyfluoromonomer of formula: 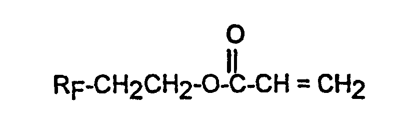 in which R_{F} is a perfluoroalkyl radical containing 4 to 16 carbon atoms;
*(b)* dimethylaminoethyl methacrylate or N-*tert*-butylaminoethyl methacrylate as monomer of formula II; and
*(c)* vinyl acetate as monomer of formula III are used.

4. Copolymers according to one of Claims 1 to 3, in which the amount of hydrogen peroxide is between 0.3 and 3% with respect to the total weight of the monomers.

5. Copolymers according to one of Claims 1 to 4, in which the dilution step and/or that of the final treatment is carried out at a temperature between 25 and 100°C, preferably between 70 and 85°C.

6. Copolymers according to one of Claims 1 to 5, in which the copolymerization solvent is N-methyl-2-pyrrolidone or a mixture of the latter with acetone.

7. Copolymers according to one of Claims 1 to 6, in which the acid used is acetic acid.

8. Application of the copolymers according to one of Claims 1 to 7, for the oleophobic and hydrophobic treatment of solid substrates, particularly papers and boards.

9. Application according to Claim 8 to the surface of a paper in an amount of 0.05 to 0.2% fluorine with respect to the weight of the paper.

10. Application according to Claim 8, into the bulk of a paper pulp in an amount of 0.2 to 0.4% fluorine with respect to the weight of pulp.

11. Solid substrate comprising at least one fluorocopolymer according to one of Claims 1 to 7.

12. Solid substrate according to Claim 11, characterized in that it is paper or board.
